# EUROPÄISCHE PATENTANMELDUNG

(11) **EP 3 954 570 A1**
(43) Veröffentlichungstag der Anmeldung: **16.02.2022**
(21) Anmeldenummer: 21175222.5
(22) Anmeldetag: 21.05.2021
(51) Int. Cl.: B60L 1/02, B60L 58/24

(54) **VORRICHTUNG UND VERFAHREN ZUM KONTROLLIEREN EINES ENERGIEVERBRAUCHS EINES FAHRZEUGS MIT EINER TRAKTIONSBATTERIE**

(30) Priorität: 10.08.2020 DE 102020121020
(71) Anmelder: VOLKSWAGEN AG, 38440 Wolfsburg (DE)
(72) Erfinder: Greskamp, Christoph, 38102 Braunschweig (DE); Tillmann, Dr. Stefan, 38518 Gifhorn (DE)
(74) Vertreter: Patentanwälte Bals & Vogel

(57) **Zusammenfassung**

Die vorgestellte Erfindung betrifft ein Fahrzeug (100) mit einer Traktionsbatterie (101). Das Fahrzeug (100) umfasst eine Anzahl elektrischer Verbraucher (103) zum Konditionieren einer Komponente des Fahrzeugs (100) und eine Kontrolleinheit (105), wobei die Kontrolleinheit (105) dazu konfiguriert ist, die Anzahl elektrischer Verbraucher (103) in einem Standardbetrieb (201) mit einem Standardverbrauch zu betreiben, und wobei die Kontrolleinheit (105) dazu konfiguriert ist, mindestens einen elektrischen Verbraucher der Anzahl elektrischer Verbraucher (103) in Reaktion auf ein Auslösen eines Sparbefehls von dem Standardbetrieb (201) in einen Sparbetrieb (207), in dem der mindestens eine elektrische Verbraucher (103) mit einem Sparverbrauch läuft, zu schalten, wobei der Sparverbrauch geringer ist als der Standardverbrauch, und wobei der mindestens eine elektrische Verbraucher (103) mindestens ein Temperierungselement zum Temperieren der Traktionsbatterie (101) umfasst.

## Beschreibung

Die vorgestellte Erfindung betrifft ein Fahrzeug und ein Verfahren zum Kontrollieren eines Energieverbrauchs eines Fahrzeugs mit einer Traktionsbatterie.

Elektrische Verbraucher, wie bspw. Heizelemente zum Temperieren einer Traktionsbatterie eines elektrisch angetriebenen Fahrzeugs, werden in der Regel in einem Standardbetrieb betrieben, bei dem die elektrischen Verbraucher einen standardmäßigen Energieverbrauch zeigen, um eine vorgegebene Leistung zu erbringen.

Insbesondere eine von einem elektrischen Verbraucher in Form eines Konditionierungselements zum Konditionieren einer Traktionsbatterie zu erbringende Leistung ist in der Regel auf eine Maximalbelastung der Traktionsbatterie ausgelegt, sodass der elektrische Verbraucher, unabhängig von einer aktuellen Anforderung bzw. einer aktuellen Betriebssituation eine hohe Leistung bereitstellt, die einen entsprechend hohen Energieverbrauch bedingt.

Durch die Auslegung auf eine Maximalbelastung entsteht in Situationen, in denen die Maximalbelastung nicht auftritt, ein elektrischer Verbraucher jedoch bereits elektrische Energie verbraucht hat, um sich oder eine Fahrzeugkomponente auf die Maximalbelastung vorzubereiten, ein energetischer Überhang, der aufgewendet wurde und nicht benötigt wird.

Die DE 10 2012 111 509 A1 beschreibt ein Verfahren zur Steuerung eines Betriebsmodus eines Kraftfahrzeugs mit einem elektrischen Antrieb, bei dem ein Anteil einer in einer Batterie gespeicherten elektrischen Energie zurückgehalten wird, und sämtliche weitere in der Batterie gespeicherte elektrische Energie in ein Versorgungsnetz gespeist wird. Dabei wird der Anteil, der in der Batterie zurückzuhalten ist, unter Verwendung von Routeninformationen bestimmt.

Die DE 10 2011 077 993 A1 beschreibt ein Verfahren zum Reduzieren eines Verbrauchs an elektrischer Energie für eine Temperierung eines Fahrzeugs, bei dem ein beim Temperieren des Fahrzeugs verwendeter Umluftanteil maximiert wird, wenn sich eine geringe Anzahl von Insassen in dem Fahrzeug befindet.

Vor diesem Hintergrund liegt der vorgestellten Erfindung die Aufgabe zugrunde, einen Verbrauch an elektrischer Energie eines Fahrzeugs zu minimieren.

Die voranstehend genannte Aufgabe wird gelöst durch den Gegenstand der unabhängigen Ansprüche. In der Beschreibung, den Zeichnungen und den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den einzelnen Erfindungsaspekten der Erfindung stets wechselseitig Bezug genommen wird bzw. Bezug genommen werden kann.

Gemäß einem ersten Aspekt der Erfindung wird die Aufgabe gelöst durch ein Fahrzeug mit einer Traktionsbatterie. Das Fahrzeug umfasst eine Anzahl elektrischer Verbraucher und eine Kontrolleinheit. Die Kontrolleinheit ist dazu konfiguriert, die Anzahl elektrischer Verbraucher in einem Standardbetrieb mit einem Standardverbrauch zu betreiben, und mindestens einen elektrischen Verbraucher der Anzahl elektrischer Verbraucher in Reaktion auf ein Auslösen eines Sparbefehls von dem Standardbetrieb in einen Sparbetrieb, in dem der mindestens eine elektrische Verbraucher mit einem Sparverbrauch läuft, zu schalten, wobei der Sparverbrauch geringer ist als der Standardverbrauch, und wobei der mindestens eine elektrische Verbraucher mindestens ein Temperierungselement zum Temperieren der Traktionsbatterie umfasst.

Unter einem Temperierungselement ist im Kontext der vorgestellten Erfindung ein Bauteil zum Einstellen einer Temperatur, wie bspw. eine Heizung und/oder eine Klimatisierung bzw. eine Kühlung, zu verstehen.

Unter einem Auslösen eines Sparbefehls ist im Kontext der vorgestellten Erfindung ein Vorgang zu verstehen, bei dem ein Sparbefehl bspw. durch Aktivierung einer Benutzerschnittstelle oder automatisch bei Erkennen einer vorgegebenen Situation durch die erfindungsgemäß vorgesehene Kontrolleinheit aktiviert wird. Entsprechend kann ein Auslösen eines Sparbefehls eine Übertragung eines Kontrollbefehls, insbesondere des Sparbefehls selbst, von der Benutzerschnittstelle zu der Kontrolleinheit oder ein Erzeugen bzw. ein Aktivieren des Sparbefehls durch die Kontrolleinheit selbst umfassen.

Die vorgestellte Erfindung basiert insbesondere auf dem Prinzip, dass ein elektrischer Verbraucher, wie bspw. das erfindungsgemäß vorgesehene Temperierungselement zum Temperieren der Traktionsbatterie, also einer Hochspannungsbatterie zum Versorgen eines Antriebs des vorgestellten Fahrzeugs, nicht immer unter idealen bzw. im Standardbetrieb vorgesehenen Betriebsbedingungen betrieben werden muss.

In Situationen, in denen ein Nutzer im Standardbetrieb vorgesehene Betriebsbedingungen, wie bspw. eine aufgeheizte bzw. gekühlte Traktionsbatterie, nicht benötigt, weil bspw. lediglich eine Kurzstreckenfahrt durchgeführt wird, ist die Kontrolleinheit dazu konfiguriert, die elektrischen Verbraucher zum Einstellen der im Standardbetrieb vorgesehenen Betriebsbedingungen in den Sparbetrieb zu schalten und, dadurch bedingt, Energie zu sparen bzw. einen Energieverbrauch des Fahrzeugs zu minimieren.

Im Sparbetrieb kann ein elektrischer Verbraucher deaktiviert sein oder mit einer gegenüber einem Standardbetrieb reduzierten Leistung betrieben werden.

Um Situationen zu erkennen, in denen ein Nutzer im Standardbetrieb vorgesehene Betriebsbedingungen nicht benötigt, ist erfindungsgemäß ein Sparbefehl vorgesehen, der insbesondere eine Situation, in der der Nutzer im Standardbetrieb vorgesehene Betriebsbedingungen nicht benötigt kennzeichnet. Entsprechend kann, wenn der Sparbefehl ausgelöst wird, die Kontrolleinheit entsprechende Kontrollbefehle erzeugen, um jeweilige elektrische Verbraucher von dem Standardbetrieb in den Sparbetrieb zu schalten.

Es kann vorgesehen sein, dass das Fahrzeug eine Benutzerschnittstelle umfasst, die dazu konfiguriert ist, den Sparbefehl in Reaktion auf eine Nutzereingabe an die Kontrolleinheit zu übermitteln oder dass die Kontrolleinheit dazu konfiguriert ist, einen maschinellen Lerner auszuführen, der dazu konfiguriert ist, Daten zu einer aktuellen Route des Fahrzeugs einer Klasse "Standardbetrieb" oder einer Klasse "Sparbetrieb" zuzuordnen, wobei die Kontrolleinheit dazu konfiguriert ist, den Sparbefehl auszulösen, wenn die aktuelle Route des Fahrzeugs der Klasse "Sparbetrieb" zugeordnet wird.

Mittels einer Benutzerschnittstelle, wie bspw. einem Schalter oder einem Kontrollsymbol auf einem Touchscreen, kann ein Nutzer den erfindungsgemäß vorgesehenen Sparbefehl auslösen, um dem Fahrzeug zu signalisieren, dass aktuell keine Konditionierung jeweiliger Komponenten des Fahrzeugs benötigt wird. Entsprechend kann der Nutzer den Sparbetrieb selbst aktivieren oder deaktivieren.

Die Benutzerschnittstelle kann weiterhin dazu konfiguriert sein, dem Nutzer eine Einstellung von Parametern des Sparbetriebs zu ermöglichen, wie bspw. einen ersten Modus, in dem jeweilige elektrische Verbraucher zum Konditionieren einer Komponente des Fahrzeugs komplett ausgeschaltet werden oder einen zweiten Modus, in dem jeweilige elektrische Verbraucher zum Konditionieren einer Komponente des Fahrzeugs mit einer gegenüber einem Standardbetrieb reduzierten Leistung, insbesondere einer durch den Nutzer vorgegebenen Leistung betrieben werden.

Mittels eines maschinellen Lerners kann eine Situation, in der der Sparbefehl auszulösen ist, automatisch erkannt werden. Dazu ermittelt der maschinelle Lerner, also ein Algorithmus, der auf der Kontrolleinheit ausgeführt wird, wie bspw. ein künstliches neuronales Netzwerk, eine "Support Vector Machine" oder jeder weitere zum Zuordnen von Daten zu verschiedenen Klassen geeignete Algorithmus, verwendet, um aktuelle Daten, insbesondere zu einer aktuell von dem vorgestellten Fahrzeug befahrenen Route, einer Klasse "Standardbetrieb" oder einer Klasse "Sparbetrieb" zuzuordnen. Dabei können die Daten zu der aktuell befahrenen Route, Routeninformationen, wie bspw. eine zurückzulegende Distanz oder eine Fahrtdauer, sowie Informationen über die Route, wie bspw. Verkehrsinformationen oder Wetterdaten umfassen.

Insbesondere gleicht der maschinelle Lerner jeweilige ermittelte Daten zu einer Route mit einem Vergleichsdatensatz, der bspw. in einer Trainingsphase ermittelt und von einem Nutzer mit einer Grundwahrheit eingeteilt wurde, ab und ordnet, unter Verwendung einer dem maschinellen Lerner zugrundeliegenden Logik, die Daten zu der Route entweder der Klasse "Standardbetrieb" oder der Klasse "Sparbetrieb" zu.

Die Kontrolleinheit kann jeweilige Daten zu einer Route aus einem Navigationssystem, insbesondere einem Navigationssystem des Fahrzeugs, ermitteln. Insbesondere kann die Kontrolleinheit aktuelle oder eine Anzahl vorausgegangener Positionsdaten des Fahrzeugs ermitteln, um diese einer Klasse "Standardbetrieb" oder einer Klasse "Sparbetrieb" zuzuordnen.

Es kann weiterhin vorgesehen sein, dass die Kontrolleinheit dazu konfiguriert ist, einen maschinellen Lerner auszuführen, der dazu konfiguriert ist, Informationen über einen aktuellen Zustand des Fahrzeugs und/oder Informationen über einen aktuellen Zustand einer Umgebung des Fahrzeugs einer Klasse "Standardbetrieb" oder einer Klasse "Sparbetrieb" zuzuordnen, wobei die Kontrolleinheit dazu konfiguriert ist, den Sparbefehl auszulösen, wenn der aktuelle Zustand des Fahrzeugs und/oder der aktuelle Zustand der Umgebung des Fahrzeugs der Klasse "Sparbetrieb" zugeordnet wird.

Zum Beurteilen, ob der Sparbefehl auszulösen ist oder nicht, können auch Informationen über einen aktuellen Zustand des Fahrzeugs, wie bspw. von einem Sensor des Fahrzeugs ermittelte Informationen, insbesondere über eine Antriebstemperatur von dem maschinellen Lerner ausgewertet, d.h. mit einem Vergleichsdatensatz abgeglichen werden. Zusätzlich oder alternativ kann der maschinelle Lerner Informationen über einen aktuellen Zustand einer Umgebung des Fahrzeugs, wie bspw. eine von einem Temperatursensor ermittelte Außentemperatur, mit einem Vergleichsdatensatz abgleichen. Dabei kann der Vergleichsdatensatz gemäß einer Regel erstellt worden sein, die technisch bedingte Aktivierungen des Standardbetriebs, wie bspw. eine Aktivierung einer Frontscheibenheizung bei einer Außentemperatur unterhalb oder oberhalb eines vorgegebenen Temperaturschwellenwerts verhindert oder erzwingt.

Es kann weiterhin vorgesehen sein, dass der maschinelle Lerner dazu konfiguriert ist, die aktuelle Route des Fahrzeugs der Klasse "Sparbetrieb" zuzuordnen, wenn eine Distanz der Route kleiner als ein vorgegebener Distanzschwellenwert einer Distanz für eine Route ist.

Um einen Energieverbrauch für eine Temperierung der Traktionsbatterie des erfindungsgemäßen Fahrzeugs bei einer Kurzstreckenfahrt, auf der die Traktionsbatterie ohnehin nicht auf Betriebstemperatur gebracht werden kann und auf der eine durch die Temperierung ggf. erreichte Mehrleistung der Traktionsbatterie nicht abgerufen wird, zu minimieren, hat sich ein Distanzschwellenwert als Kriterium bei der Zuordnung zu der Klasse "Sparbetrieb" oder der Klasse "Standardbetrieb" als besonders geeignet erwiesen.

Es kann weiterhin vorgesehen sein, dass der maschinelle Lerner anhand einer Anzahl vorgegebener Routen trainiert ist.

Um eine automatische Zuordnung von Daten zu einer aktuell befahrenen Route der Klasse "Sparbetrieb" oder der Klasse "Standardbetrieb" zuzuordnen, eignet sich eine Anzahl vorab definierter bzw. vorgegebener Routen, die von einem Nutzer mit einer Grundwahrheit der Klasse "Sparbetrieb" oder der Klasse "Standardbetrieb" zugeordnet für einen Abgleich mit den Daten zu der aktuell befahrenen Route. Dabei können die vorgegebenen Routen in einem zentralen Speicher, wie bspw. einem Cloudserver hinterlegt sein und von einem Hersteller als allgemeine Information für eine Vielzahl Fahrzeuge bereitgestellt werden oder von einem Nutzer individualisiert bereitgestellt werden.

Es kann weiterhin vorgesehen sein, dass der maschinelle Lerner anhand mindestens einer Route trainiert ist, die von dem Fahrzeug in einem Kalibrierungsbetrieb zurückgelegt wurde, wobei das Fahrzeug eine Benutzerschnittstelle umfasst, mittels derer der Kalibrierungsbetrieb aktivierbar oder deaktivierbar ist.

Um ein Fahrzeug an die Gewohnheiten seiner Nutzer bzw. an die Gegebenheiten seines jeweiligen Einsatzortes anzupassen, kann bspw. ein Vergleichsdatensatz, mit dem der maschinelle Lerner jeweilige aktuell ermittelte Daten abgleicht, bzw. eine Logik, mit der der maschinelle eine Zuordnung zu den Klassen "Sparbetrieb" und "Standardbetrieb" vornimmt, in einem Kalibrierungsbetrieb aktualisiert werden. Dazu kann der Kalibrierungsbetrieb bspw. durch eine Eingabe mittels einer Benutzerschnittstelle aktiviert werden, wenn der Nutzer eine bestimmte Route fährt, die er bei Fahrtende bzw. bei Beendigung des Kalibrierungsbetriebs als der Klasse "Sparbetrieb" oder der Klasse "Standardbetrieb" zugehörig beurteilt.

Es kann weiterhin vorgesehen sein, dass der maschinelle Lerner anhand einer Anzahl von dem Fahrzeug zurückgelegter Routen trainiert ist.

Durch Verwendung von Daten zu jeweiligen von dem Fahrzeug zurückgelegter Routen kann das erfindungsgemäße Fahrzeug bzw. dessen Kontrolleinheit automatisch einen für das Fahrzeug spezifischen Vergleichsdatensatz bzw. eine entsprechende Zuordnungslogik erstellen. Dabei kann das Fahrzeug jeweilige Daten zu zurückgelegten Routen gemäß einem vorgegebenen Kriterienkatalog, wie bspw. einem Distanzschwellenwert und/oder einem Fahrtdauerschwellenwert, als der Klasse "Sparbetrieb" oder der Klasse "Standardbetrieb" zugehörig einteilen.

Es kann weiterhin vorgesehen sein, dass die Kontrolleinheit dazu konfiguriert ist, den maschinellen Lerner anhand einer Anzahl letzter Routen zu trainieren und entsprechend dynamisch zu aktualisieren.

Um eine Fehleinschätzung durch den maschinellen Lerner weitgehend auszuschließen, kann der maschinelle Lerner regelmäßig, bspw. in vorgegebenen zeitlichen Abständen trainiert werden und eine Anzahl letzter gefahrener Routen zu einem Vergleichsdatensatz bzw. einer entsprechenden Auswertelogik hinzufügen.

Es kann weiterhin vorgesehen sein, dass die Kontrolleinheit eine Schnittstelle zum Eingeben einer Nutzerkennung umfasst, und die Kontrolleinheit dazu konfiguriert ist, den maschinellen Lerner lediglich anhand von Routen zu trainieren, die unter Eingabe einer ausgewählten Nutzerkennung gefahren wurden.

Mittels einer Nutzerkennung, die ein Nutzer bspw. über eine Benutzerschnittstelle eingibt oder mittels eines Funkchips in seinem Fahrzeugschlüssel bereitstellt, kann ein Nutzer individualisiert werden und entsprechend ein dem individualisierten Nutzer zugeordneter Datensatz des maschinellen Lerners aktiviert werden, sodass durch den individualisierten Nutzer vorgenommene spezifische Einteilungen jeweiliger Routen zu der Klasse "Sparbetrieb" oder der Klasse "Standardbetrieb" nicht durch einen weiteren das Fahrzeug verwendenden Nutzer verändert werden.

Es kann weiterhin vorgesehen sein, dass die Anzahl elektrischer Verbraucher mindestens einen Verbraucher der folgenden Liste an Verbrauchern umfasst: Innenraumheizung, Batterieheizung, Innenraumkühlung, Batteriekühlung.

In einem zweiten Aspekt betrifft die vorgestellte Erfindung ein Verfahren zum Kontrollieren eines Energieverbrauchs eines Fahrzeugs mit einer Traktionsbatterie, bei dem eine Anzahl elektrischer Verbraucher des Fahrzeugs in einem Standardbetrieb mit einem Standardverbrauch betrieben werden, und mindestens ein elektrischer Verbraucher der Anzahl elektrischer Verbraucher in Reaktion auf ein Auslösen eines Sparbefehls durch eine Kontrolleinheit, von dem Standardbetrieb in einen Sparbetrieb, in dem der mindestens eine elektrische Verbraucher mit einem Sparverbrauch läuft, geschaltet wird, wobei der Sparverbrauch geringer ist als der Standardverbrauch, und wobei der mindestens eine elektrische Verbraucher mindestens ein Temperierungselement zum Temperieren der Traktionsbatterie umfasst.

Das vorgestellte Verfahren dient insbesondere zum Betrieb des vorgestellten Fahrzeugs.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine mögliche Ausgestaltung des vorgestellten Fahrzeugs.
- Fig. 2: eine mögliche Ausgestaltung des vorgestellten Verfahrens.

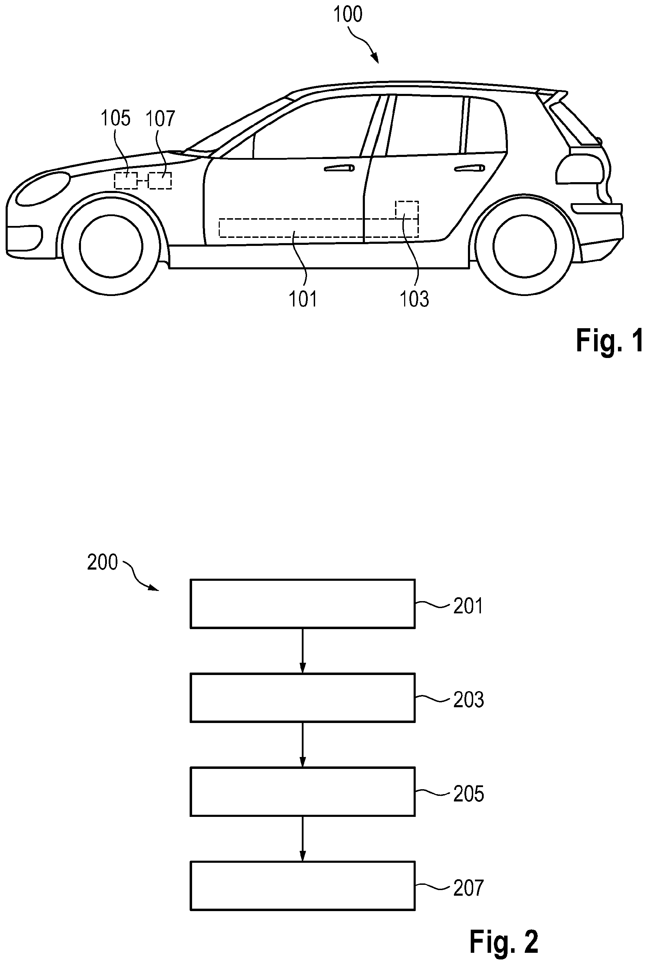

In Fig. 1 ist ein Fahrzeug 100 dargestellt. Das Fahrzeug 100 umfasst eine Traktionsbatterie 101, einen elektrischen Verbraucher 103 zum Konditionieren der Traktionsbatterie, in Form einer Temperierungseinheit, und eine Kontrolleinheit 105.

Die Kontrolleinheit 105 ist dazu konfiguriert, den elektrischen Verbraucher 103 in einem Standardbetrieb mit einem Standardverbrauch zu betreiben und in Reaktion auf ein Auslösen eines Sparbefehls von dem Standardbetrieb in einen Sparbetrieb, in dem der mindestens eine elektrische Verbraucher mit einem Sparverbrauch läuft, zu schalten, wobei der Sparverbrauch geringer ist als der Standardverbrauch.

Zum Auslösen des Sparbefehls umfasst das Fahrzeug 100 eine Benutzerschnittstelle 107 in Form bspw. eines Drückschalters oder eines Touchscreens. Durch Betätigen der Benutzerschnittstelle 107 kann ein Nutzer des Fahrzeugs 100 den Sparbefehl manuell auslösen, also aktivieren oder deaktivieren.

Um einen Nutzer des Fahrzeugs 100 zu entlasten, kann die Kontrolleinheit 105 in einen automatischen Betrieb geschaltet werden, in dem die Kontrolleinheit 105 einen maschinellen Lerner ausführt, der Daten zu einer aktuell durch das Fahrzeug 100 befahrenen Route bspw. aus einem Navigationssystem ausliest und einer Klasse "Sparbetrieb" oder einer Klasse "Standardbetrieb" zuordnet.

Sobald der maschinelle Lerner jeweilige Daten der Klasse "Sparbetrieb" zuordnet, löst die Kontrolleinheit 105 einen Sparbefehl aus, der den Verbraucher 103 von einem Standardbetrieb in einen Sparbetrieb, in dem der Verbraucher 103 bspw. deaktiviert ist, schaltet. Entsprechend wird durch das Auslösen des Sparbefehls ein Energieverbrauch des Fahrzeugs 100 gegenüber dem Standardbetrieb gesenkt.

In Fig. 2 ist ein schematischer Ablauf eines Verfahrens 200 zum Kontrollieren eines Energieverbrauchs eines Fahrzeugs mit einer Traktionsbatterie dargestellt. In einem Standardbetrieb 201 wird eine Anzahl elektrischer Verbraucher zum Konditionieren einer Komponente des Fahrzeugs mit einem Standardverbrauch betrieben.

In einem Auslöseschritt 203 wird ein Sparbefehl ausgelöst.

In Reaktion auf das Auslösen des Sparbefehls in dem Auslöschritt 203 wird mindestens ein elektrischer Verbraucher der Anzahl elektrischer Verbraucher in einem Schaltschritt 205 durch eine Kontrolleinheit, von dem Standardbetrieb in einen Sparbetrieb 207, in dem der mindestens eine elektrische Verbraucher mit einem Sparverbrauch läuft, geschaltet.

### Bezugszeichenliste

- 100: Fahrzeug
- 101: Traktionsbatterie
- 103: Verbraucher
- 105: Kontrolleinheit
- 107: Benutzerschnittstelle
- 200: Verfahren
- 201: Standardbetrieb
- 203: Auslöseschritt
- 205: Schaltschritt
- 207: Sparbetrieb

## Patentansprüche

1. Fahrzeug (100) mit einer Traktionsbatterie (101), umfassend:
- eine Anzahl elektrischer Verbraucher (103),
- eine Kontrolleinheit (105),
wobei die Kontrolleinheit (105) dazu konfiguriert ist, die Anzahl elektrischer Verbraucher (103) in einem Standardbetrieb (201) mit einem Standardverbrauch zu betreiben, und wobei die Kontrolleinheit (105) dazu konfiguriert ist, mindestens einen elektrischen Verbraucher der Anzahl elektrischer Verbraucher (103) in Reaktion auf ein Auslösen eines Sparbefehls von dem Standardbetrieb (201) in einen Sparbetrieb (207), in dem der mindestens eine elektrische Verbraucher (103) mit einem Sparverbrauch läuft, zu schalten,
wobei der Sparverbrauch geringer ist als der Standardverbrauch, und
wobei der mindestens eine elektrische Verbraucher (103) mindestens ein Temperierungselement zum Temperieren der Traktionsbatterie (101) umfasst.

2. Fahrzeug (100) nach Anspruch 1,
**dadurch gekennzeichnet,**
**dass** das Fahrzeug (100) eine Benutzerschnittstelle (107) umfasst, die dazu konfiguriert ist, den Sparbefehl in Reaktion auf eine Nutzereingabe an die Kontrolleinheit (105) zu übermitteln oder dass die Kontrolleinheit (105) dazu konfiguriert ist, einen maschinellen Lerner auszuführen, der dazu konfiguriert ist, Daten zu einer aktuellen Route des Fahrzeugs (100) einer Klasse "Standardbetrieb" oder einer Klasse "Sparbetrieb" zuzuordnen,
wobei die Kontrolleinheit (105) dazu konfiguriert ist, den Sparbefehl auszulösen, wenn die aktuelle Route des Fahrzeugs (100) der Klasse "Sparbetrieb" zugeordnet wird.

3. Fahrzeug (100) nach Anspruch 1 oder 2,
**dadurch gekennzeichnet,**
**dass** die Kontrolleinheit (105) dazu konfiguriert ist, einen maschinellen Lerner auszuführen, der dazu konfiguriert ist, Informationen über einen aktuellen Zustand des Fahrzeugs (100) und/oder Informationen über einen aktuellen Zustand einer Umgebung des Fahrzeugs (100) einer Klasse "Standardbetrieb" oder einer Klasse "Sparbetrieb" zuzuordnen, wobei die Kontrolleinheit (105) dazu konfiguriert ist, den Sparbefehl auszulösen, wenn der aktuelle Zustand des Fahrzeugs (100) und/oder der aktuelle Zustand der Umgebung des Fahrzeugs (100) der Klasse "Sparbetrieb" zugeordnet wird.

4. Fahrzeug (100) nach Anspruch 2 oder 3,
**dadurch gekennzeichnet,**
**dass** der maschinelle Lerner dazu konfiguriert ist, die aktuelle Route des Fahrzeugs (100) der Klasse "Sparbetrieb" zuzuordnen, wenn eine Distanz der Route kleiner als ein vorgegebener Distanzschwellenwert einer Distanz für eine Route ist.

5. Fahrzeug (100) nach Anspruch 2 oder 3,
**dadurch gekennzeichnet,**
**dass** der maschinelle Lerner anhand einer Anzahl vorgegebener Routen trainiert ist.

6. Fahrzeug (100) nach Anspruch 2 oder 3,
**dadurch gekennzeichnet,**
**dass** der maschinelle Lerner anhand mindestens einer Route trainiert ist, die von dem Fahrzeug (100) in einem Kalibrierungsbetrieb zurückgelegt wurde, wobei das Fahrzeug (100) eine Benutzerschnittstelle (107) umfasst, mittels derer der Kalibrierungsbetrieb aktivierbar oder deaktivierbar ist.

7. Fahrzeug (100) nach Anspruch 2 oder 3,
**dadurch gekennzeichnet,**
**dass** die Kontrolleinheit (105) dazu konfiguriert ist, den maschinellen Lerner anhand einer Anzahl von dem Fahrzeug (100) zurückgelegter Routen zu trainieren.

8. Fahrzeug (100) nach Anspruch 7,
**dadurch gekennzeichnet,**
**dass** die Kontrolleinheit (105) dazu konfiguriert ist, den maschinellen Lerner anhand einer Anzahl letzter Routen zu trainieren und entsprechend dynamisch zu aktualisieren.

9. Fahrzeug (100) nach Anspruch 7 oder 8,
**dadurch gekennzeichnet,**
**dass** die Kontrolleinheit (105) eine Schnittstelle zum Eingeben einer Nutzerkennung umfasst, und die Kontrolleinheit (105) dazu konfiguriert ist, den maschinellen Lerner lediglich anhand von Routen zu trainieren, die unter Eingabe einer ausgewählten Nutzerkennung gefahren wurden.

10. Fahrzeug (100) nach einem der voranstehenden Ansprüche,
**dadurch gekennzeichnet,**
**dass** die Anzahl elektrischer Verbraucher (103) mindestens einen Verbraucher der folgenden Liste an Verbrauchern umfasst: Innenraumheizung, Batterieheizung, Innenraumkühlung, Batteriekühlung.

11. Verfahren (200) zum Kontrollieren eines Energieverbrauchs eines Fahrzeugs (100) mit einer Traktionsbatterie (101), bei dem eine Anzahl elektrischer Verbraucher (103) des Fahrzeugs (100) in einem Standardbetrieb (201) mit einem Standardverbrauch betrieben werden, und mindestens ein elektrischer Verbraucher (103) der Anzahl elektrischer Verbraucher in Reaktion auf ein Auslösen (203) eines Sparbefehls durch eine Kontrolleinheit (105), von dem Standardbetrieb (201) in einen Sparbetrieb (207), in dem der mindestens eine elektrische Verbraucher (103) mit einem Sparverbrauch läuft, geschaltet (205) wird, wobei der Sparverbrauch geringer ist als der Standardverbrauch, und wobei der mindestens eine elektrische Verbraucher (103) mindestens ein Temperierungselement zum Temperieren der Traktionsbatterie (101) umfasst.
